# EUROPÄISCHE PATENTSCHRIFT

(11) **EP 4 325 215 B1**
(45) Veröffentlichungstag und Bekanntmachung des Hinweises auf die Patenterteilung: **01.10.2025**
(21) Anmeldenummer: 22191208.2
(22) Anmeldetag: 19.08.2022
(51) Int. Cl.: G01N 29/24, E06B 7/23, E05F 15/43, B60J 10/24, G01N 29/44, G01N 29/34, B60J 10/273

(54) **VORRICHTUNG UND VERFAHREN ZUR EINKLEMMERKENNUNG AN EINEM TRANSPORTMITTEL**
DEVICE AND METHOD FOR DETECTING JAMMING ON A MEANS OF TRANSPORT
DISPOSITIF ET PROCÉDÉ DE DÉTECTION DE COINCEMENT SUR UN MOYEN DE TRANSPORT

(43) Veröffentlichungstag der Anmeldung: 21.02.2024
(73) Patentinhaber: Hübner GmbH & Co. KG, 34123 Kassel (DE)
(72) Erfinder: Burhenn, Marcel, 37247 Großalmerode (DE); Breuninger, Martin, 89233 Neu-Ulm (DE); Weitzel, Laurin, 34131 Kassel (DE)

(56) Entgegenhaltungen:
- US-A- 4 635 032
- US-A1- 2002 109 591

## Beschreibung

Die vorliegende Offenbarung betrifft eine Vorrichtung zur Einklemmerkennung an einem Transportmittel, eine Tür für ein Transportmittel mit der Vorrichtung, ein Transportmittel mit der Tür, ein Verfahren zur Einklemmerkennung an einem Transportmittel und ein Speichermedium zum Ausführen des Verfahrens. Die vorliegende Offenbarung betrifft insbesondere eine Einklemmerkennung an einem Transportmittel durch Ultraschall in einem Hohlleiter.

### Stand der Technik

Transportmittel wie Busse und Bahnen besitzen automatische Türen, die zum Beispiel an Haltestellen geöffnet und geschlossen werden. An den Türen sind im Allgemeinen Gummiprofilleisten vorhanden, die im geschlossenen Zustand eine Abdichtung zwischen der Tür und einem Rahmen oder einer anderen Tür bilden. Aufgrund der gestiegenen Anforderungen an Transportmittel und aufgrund von erhöhten Sicherheitsvorschriften weisen Gummiprofilleisten neben ihrer Abdichtfunktion oftmals auch eine oder mehrere Signalgeberfunktionen auf. So sind in vielen Gummiprofilleisten Kontaktelemente integriert, die einen Kontakt mit einem Gegenstand oder einer Person anzeigen und gegebenenfalls eine Bewegung der Tür des Transportmittels unterbrechen oder stoppen, um eine Beschädigung des Gegenstands bzw. eine Verletzung der Person zu vermeiden.

Herkömmliche Signalgeberfunktionen verwenden oftmals Schaltleisten oder Druckwellenschalter. Schaltleisten erfordern jedoch eine Gummimischung mit leitfähiger Schichtung und Elektroden in einer Hohlkammer der Gummiprofilleisten. Dies ist jedoch aufwändig und teuer in der Herstellung. Druckwellenschalter reagieren empfindlich auf Undichtigkeit, Feuchtigkeit und Nässe, so dass es bei einer Undichtigkeit oder in die Hohlkammer eintretender Nässe zu einem Totalausfall der Druckwellenschalter kommen kann, was wiederum zu potenziellen Sicherheitsrisiken führen kann. Ebenso besteht hier das Risiko von chemischen Einflüssen auf die leitfähigen Gummimischungen. Diese können ebenfalls zu einem Funktionsverlust führen.

Die US 2002/109591 A1 beschreibt eine Erfassungseinrichtung zur Steuerung der Bewegung eines Bauteils. Die Erfassungseinrichtung umfasst einen Sensor, der ein Ausgangssignal ausgibt, das sich bei einer Deformation ändert, eine Steuereinrichtung, die einen Speicher zum Speichern eines Schwellenwerts, eine Einrichtung zum Vergleichen des Sensorausgangs mit dem Schwellenwert und eine Ausgabeeinrichtung zum Bereitstellen eines Steuersignals basierend auf dem Vergleich umfasst.

Die US 4 635 032 A offenbart eine Alarmvorrichtung für Fahrzeugtüren, die sich in einem hohlen Gummischlauch befindet und Alarm gibt, wenn der Schlauch zusammengedrückt wird.

### Offenbarung der Erfindung

Es ist eine Aufgabe der vorliegenden Offenbarung, eine Vorrichtung zur Einklemmerkennung an einem Transportmittel, eine Tür für ein Transportmittel mit der Vorrichtung, ein Transportmittel mit der Tür, ein Verfahren zur Einklemmerkennung an einem Transportmittel und ein Speichermedium zum Ausführen des Verfahrens anzugeben, die eine zuverlässige Einklemmerkennung ermöglichen. Insbesondere ist es eine Aufgabe der vorliegenden Offenbarung, Kosten für eine Einklemmerkennung und/oder eine Ausfallwahrscheinlichkeit der Einklemmerkennung zu reduzieren.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Offenbarung ist eine Vorrichtung zur Einklemmerkennung an einem Transportmittel, insbesondere an verschließbaren Öffnungen des Transportmittels, angegeben. Die Vorrichtung umfasst ein flexibles Element, das einen Hohlraum umfasst; einen Ultraschallsender, der am oder im Hohlraum angeordnet ist, wobei der Ultraschallsender eingerichtet ist, um Ultraschall in den Hohlraum zu emittieren; einen Reflektor, der am oder im Hohlraum angeordnet ist, wobei der Reflektor eingerichtet ist, um Ultraschall zu reflektieren, wobei der Reflektor eine Referenz bereitstellt, anhand derer Verformungen des flexiblen Elements erkennbar sind; einen Ultraschalldetektor, der am oder im Hohlraum angeordnet ist, wobei der Ultraschalldetektor eingerichtet ist, um den vom Ultraschallsender emittierten und in der Vorrichtung reflektierten Ultraschall zu detektieren und ein Detektionssignal zu erzeugen; und ein Prozessormodul, das eingerichtet ist, um basierend auf dem Detektionssignal des Ultraschalldetektors zu bestimmen, ob eine Verformung des flexiblen Elements vorhanden ist, die anzeigt, dass durch das flexible Element ein Objekt (z.B. ein Gegenstand oder eine Person) eingeklemmt ist, das die Verformung verursacht, wobei der Ultraschallsender und der Ultraschalldetektor einen Transducer bilden, und wobei der Reflektor dem Transducer gegenüberliegend angeordnet ist, so dass der Ultraschallsender den Ultraschall in Richtung des Reflektors emittiert und der Reflektor den Ultraschall in Richtung des Ultraschalldetektors zurückreflektiert.

Erfindungsgemäß wird in den Hohlraum des flexiblen Elements Ultraschall abgestrahlt, dort reflektiert und detektiert. Basierend auf den detektierten Reflektionen des Ultraschalls wird bestimmt, ob eine Verformung des flexiblen Elements vorliegt. Hierzu dient der Reflektor als Referenz, d.h. wenn der Ultraschall den Hohlraum ungehindert durchläuft und vom Reflektor zurück zum Ultraschalldetektor reflektiert wird, ist keine Verformung und damit keine Einklemmung eines Objekts vorhanden. Entspricht der am Ultraschalldetektor empfangene Ultraschall nicht dieser Referenz, kann z.B. in Abhängigkeit einer Laufzeit und/oder einer Amplitude der am Ultraschalldetektor empfangenen Reflektionen bestimmt werden, wie stark die Verformung ist und ob sich daraus ableiten lässt, dass ein Objekt durch das flexible Element eingeklemmt ist. Die Kombination aus Ultraschallsender, Reflektor und Ultraschalldetektor ermöglicht dabei eine zuverlässige und kostengünstige Einklemmerkennung.

Die Vorrichtung, insbesondere das Prozessormodul, kann ein Digitalsignal ausgeben, das an eine externe Einheit ausgegeben wird und eine Einklemmung anzeigt. Die externe Einheit kann zum Beispiel eine Türsteuerung sein, die ein Öffnen und Schließen von Türen des Transportmittels steuert. Damit kann die erfindungsgemäße Vorrichtung flexibel eingesetzt werden. Beispielsweise können herkömmliche Schaltleistensysteme und Druckwellenschalter durch die erfindungsgemäße Vorrichtung ersetzt werden, ohne dass eine Anpassung z.B. der Türsteuerungen oder der Bordelektronik des Transportmittels erfolgen muss.

Die Vorrichtung kann optional weitere Ausgänge bereitstellen, wie zum Beispiel Auslösezeiten (d.h. erkannte Einklemmungen), Fehlerprotokolle, eine Systembereitschaft, etc. In einigen Ausführungsformen kann die Vorrichtung einen Fehlerspeicher für Fehlerprotokolle umfassen, der die letzten Ereignisse entweder mit der Zeitdifferenz seit Auftreten oder seit Betriebsbeginn an einem Tag dokumentiert. Hierdurch können die Anforderungen an eine Uhr in der Schaltung reduziert werden, da der Driftzeitraum geringer ist und der Drift in einem relevanten Zeitraum (z.B. bis zur Prüfung durch einen Gutachter) selbst bei kostengünstigen Komponenten hinreichend klein ausfällt.

Vorzugsweise ist die Verformung eine Querschnittsverengung oder Einschnürung des Hohlraums des flexiblen Elements.

Vorzugsweise ist der Reflektor innerhalb des Hohlraums angeordnet. Anders gesagt kann der Reflektor ein innenliegender Reflektor sein.

Vorzugsweise ist der Ultraschallsender eingerichtet, um Ultraschallpulse zu emittieren. Jeder Ultraschallpuls weist dabei eine Pulsbreite und eine Amplitude auf, die je nach Anforderungen an die Vorrichtung und/oder einem Anwendungsgebiet der Vorrichtung geeignet gewählt werden können.

Vorzugsweise ist der Ultraschallsender eingerichtet, um die Ultraschallpulse in vorbestimmten Zeitintervallen zu emittieren. Beispielsweise können die Ultraschallpulse in regelmäßigen Zeitintervallen emittiert werden.

Vorzugsweise ist der Ultraschallsender eingerichtet, um die Ultraschallpulse situationsabhängig zu emittieren. In einigen Ausführungsformen können die Ultraschallpulse in Abhängigkeit eines Betriebszustands des Transportmittels und/oder eines Bewegungszustands des Transportmittels emittiert werden. Insbesondere kann die Vorrichtung zur Einklemmerkennung nur dann betrieben werden, wenn die Gefahr einer Einklemmung eines Objekts durch das flexible Element besteht. Beispielhafte Betriebszustände, in denen Ultraschallpulse emittiert werden, umfassen ein Schließen einer Öffnung des Transportmittels, wie zum Beispiel ein Schließen einer Tür des Transportmittels. Ein beispielhafter Bewegungszustand des Transportmittels, während dem Ultraschallpulse emittiert werden, ist ein Stillstand des Transportmittels. Ein weiteres Beispiel ist der Zeitraum nach dem Verschließen der Tür während der anfänglichen Beschleunigungsphase eines Transportmittels.

Vorzugsweise ist das Prozessormodul eingerichtet, um basierend auf einer Laufzeit der in der Vorrichtung reflektierten und am Ultraschalldetektor empfangenen Ultraschallpulse zu bestimmen, ob die Verformung des flexiblen Elements vorhanden ist. Insbesondere können die Ultraschallpulse in Abhängigkeit der Verformung an verschiedenen Orten reflektiert werden, was zu unterschiedlichen Laufzeiten zwischen dem Ultraschallsender und dem Ultraschalldetektor führt, die wiederum Aufschluss über die Verformung des flexiblen Elements geben.

Ergänzend oder alternativ ist das Prozessormodul eingerichtet, um basierend auf einer Amplitude der in der Vorrichtung reflektierten und am Ultraschalldetektor empfangenen Ultraschallpulse zu bestimmen, ob die Verformung des flexiblen Elements vorhanden ist. Insbesondere können die Ultraschallpulse in Abhängigkeit der Verformung unterschiedlich reflektiert werden, was die Amplitude der Reflektionen beeinflusst, so dass daraus Hinweise auf die Verformung des flexiblen Elements abgeleitet werden können. Das Betrachten der Amplituden der Reflektionen ermöglicht unter anderem eine flexible Einstellung der Empfindlichkeit der Einklemmerkennung z.B. durch Setzen geeigneter Schwellwerte für die Amplituden.

Vorzugsweise ist das Prozessormodul eingerichtet, um zu bestimmen, dass durch das flexible Element ein Objekt eingeklemmt ist, das die Verformung verursacht, falls die Laufzeit einer am Ultraschalldetektor empfangenen Reflektion eines Ultraschallpulses kürzer als eine Referenzlaufzeit ist. Die Referenzlaufzeit kann dabei einer Laufzeit zwischen dem Ultraschallsender und dem Ultraschalldetektor eines am Reflektor reflektierten Ultraschallpulses entsprechen. Anders gesagt kann der Reflektor eine Referenz bereitstellen. Falls ein Ultraschallpuls den Reflektor nicht erreicht und vollständig von einem verformten Bereich reflektiert wird, wird das Detektionssignal des Ultraschalldetektors eine (einzelne) Reflektion mit kürzerer Laufzeit anzeigen. Hieraus lässt sich ein Rückschluss auf eine starke Verformung des flexiblen Elements ziehen und somit eine Einklemmung eines Objekts durch das flexible Element erkennen.

Vorzugsweise ist das Prozessormodul eingerichtet, um zu bestimmen, dass durch das flexible Element ein Objekt eingeklemmt ist, das die Verformung verursacht, falls die Amplitude der am Ultraschalldetektor mit der Referenzlaufzeit empfangenen Reflektion des Ultraschallpulses kleiner als eine Referenzamplitude ist. Die Referenzamplitude kann dabei einer Amplitude entsprechen, die auftritt, falls keine Verformung vorhanden ist und der Ultraschallpuls den Reflektor ungehindert erreicht. Die geringere Amplitude des Ultraschallpulses mit der Referenzlaufzeit kann angeben, dass ein Teil des Ultraschallpulses durch einen verformten Bereich des flexiblen Elements reflektiert wird, wobei trotzdem noch ein Teil des Ultraschallpulses den Reflektor erreicht. Dies ist ein Hinweis auf eine teilweise Verformung des flexiblen Elements.

Vorzugsweise kann das Prozessormodul eingerichtet sein, um basierend auf einer Abweichung der Amplitude der Reflektion von der Referenzamplitude ein Maß der Verformung des flexiblen Elements zu bestimmen. Ist die Abweichung gering, liegt eine geringfügige Verformung vor. Ist die Abweichung hingegen groß, liegt eine starke Verformung vor.

Vorzugsweise ist das Prozessormodul eingerichtet, um zu bestimmen, dass durch das flexible Element ein Objekt eingeklemmt ist, das die Verformung verursacht, falls zwei Reflektionen des Ultraschallpulses mit unterschiedlichen Laufzeiten erfasst werden. Insbesondere kann eine erste Reflektion der zwei Reflektionen mit der Referenzlaufzeit erfasst werden, und eine zweite Reflektion der zwei Reflektionen kann mit einer Laufzeit, die kleiner als die Referenzlaufzeit ist, empfangen werden. Das Auftreten von zwei Reflektionen aus demselben ausgesendeten Ultraschallpuls kann angeben, dass ein Teil des Ultraschallpulses durch einen verformten Bereich des flexiblen Elements reflektiert wird, wobei trotzdem noch ein Teil des Ultraschallpulses den Reflektor erreicht. Dies ist ein Hinweis auf eine teilweise Verformung des flexiblen Elements.

Vorzugsweise ist das Prozessormodul eingerichtet, um eine Kalibrierung der Vorrichtung durchzuführen. Insbesondere kann eine Selbstkalibrierung erfolgen. Hierzu kann der Ultraschallsender einen initialen Ultraschallimpuls aussenden. Falls die am Ultraschalldetektor empfangene Antwort innerhalb eines vorbestimmten Erwartungsfensters liegt, kann die Vorrichtung aktiviert bzw. scharfgeschaltet werden und Ultraschallpulse aussenden, um auf ein Einklemmen zu überwachen. Typischerweise erfolgt die Kalibrierung in Situationen, in denen keine Verformung oder Einklemmung vorliegt, wie zum Beispiel bei vollständig geöffneten Türen des Transportmittels und/oder während der Fahrt mit hoher Geschwindigkeit.

Vorzugsweise sind der Ultraschallsender und der Ultraschalldetektor in einer Funktionseinheit integriert. Insbesondere können der Ultraschallsender und der Ultraschalldetektor in einem gemeinsamen Hardware-Modul realisiert sein. Durch die Integration kann das Hardware-Modul einfach und mit geringem Aufwand ausgetauscht werden.

Vorzugsweise bilden der Ultraschallsender und der Ultraschalldetektor eine Sende- und Empfängereinheit..

Vorzugsweise weist der Hohlraum des flexiblen Elements einen ersten Abschnitt und einen dem ersten Abschnitt gegenüberliegenden zweiten Abschnitt auf. Der Ultraschallsender und der Ultraschalldetektor können im oder am ersten Abschnitt, also demselben Abschnitt des Hohlraums, angeordnet sein. Durch die einseitige Montage verringert sich ein Montageaufwand.

Vorzugsweise ist der Reflektor im oder am zweiten Abschnitt angeordnet.

Vorzugsweise ist der erste Abschnitt ein erstes Ende und/oder eine erste Öffnung des Hohlraumes. Ergänzend oder alternativ ist der zweite Abschnitt ein zweites Ende und/oder eine zweite Öffnung des Hohlraums.

Vorzugsweise sind der Ultraschallsender und der Ultraschalldetektor (und optional das Prozessormodul) in ein erstes Verschlusselement integriert, das das erste Ende und/oder die erste Öffnung des Hohlraums verschließt. Das erste Verschlusselement kann zum Beispiel eine Kappe oder ein Stopfen sein.

Vorzugsweise ist der Reflektor (und optional das Prozessormodul) in ein zweites Verschlusselement integriert, das das zweite Ende und/oder die zweite Öffnung des Hohlraums verschließt. Das zweite Verschlusselement kann zum Beispiel eine Kappe oder ein Stopfen sein.

Vorzugsweise weist der Hohlraum eine längliche Form auf. Die längliche Form kann eine Längserstreckung oder Längsachse aufweisen. In einigen Ausführungsformen können der erste Abschnitt mit dem Ultraschallsender und dem Ultraschalldetektor sowie der zweite Abschnitt mit dem Reflektor entlang der Längsachse und (maximal) beabstandet voneinander angeordnet sein.

Vorzugsweise weist der Hohlraum in einem unverformten Zustand einen runden Querschnitt auf. Insbesondere kann der Hohlraum zylindrisch ausgebildet sein. Die vorliegende Offenbarung ist jedoch nicht hierauf begrenzt und es können andere Querschnittsgeometrien verwendet werden.

Vorzugsweise ist der Hohlraum mit Luft gefüllt. Durch die Luft kann der Ultraschall innerhalb des Hohlraums auf eine definierte Art und Weise übertragen werden.

Vorzugsweise ist eine Innenwand des Hohlraums mit einem reflektierenden Material beschichtet.

Vorzugsweise besteht das flexible Element aus Kunststoff, insbesondere aus Gummi wie zum Beispiel schwarzem Gummi.

Vorzugsweise ist das flexible Element ein Profil, insbesondere ein Gummiprofil. Das Profil kann eine oder mehrere Vorsprünge und/oder eine oder mehrere Luftkammern und/oder eine oder mehrere Profillippen, die einen flexiblen Kontaktbereich bilden, aufweisen.

Ergänzend oder alternativ kann das flexible Element eine Dichtung sein. Die Dichtung kann eine oder mehrere Vorsprünge und/oder eine oder mehrere Luftkammern und/oder eine oder mehrere Profillippen, die einen flexiblen Kontaktbereich zum Abdichten bilden, aufweisen.

Vorzugsweise ist das flexible Element eine Sicherheitsprofilleiste, insbesondere für eine Türe eines Transportmittels.

Gemäß einem weiteren unabhängigen Aspekt der vorliegenden Offenbarung ist eine Tür für ein Transportmittel mit einer Vorrichtung zur Einklemmerkennung an einem Transportmittel gemäß den Ausführungsformen der vorliegenden Offenbarung angegeben.

Gemäß einem weiteren unabhängigen Aspekt der vorliegenden Offenbarung ist ein Transportmittel angegeben. Das Transportmittel umfasst die Vorrichtung zur Einklemmerkennung an einem Transportmittel und/oder die Tür gemäß den Ausführungsformen der vorliegenden Offenbarung.

Der Begriff Transportmittel umfasst Nutzfahrzeuge (z.B. Busse), Bahnen, Fahrstühle, Flugzeuge und Seilbahngondeln, etc., die der Beförderung von Personen, Gütern, etc. dienen.

Gemäß einem weiteren unabhängigen Aspekt der vorliegenden Offenbarung ist ein Verfahren zur Einklemmerkennung an einem Transportmittel angegeben. Das Verfahren umfasst ein Aussenden, durch einen Ultraschallsender, von Ultraschallpulsen in einen Hohlraum eines flexiblen Elements in Richtung eines Reflektors, wobei der Reflektor eine Referenz bereitstellt, anhand derer Verformungen des flexiblen Elements erkennbar sind; ein Empfangen, durch einen Ultraschalldetektor, von im Hohlraum und/oder am Reflektor reflektiertem Ultraschall und Ausgeben eines entsprechenden Detektionssignals, wobei der Ultraschallsender und der Ultraschalldetektor einen Transducer bilden, und wobei der Reflektor dem Transducer gegenüberliegend angeordnet ist, so dass der Ultraschallsender den Ultraschall in Richtung des Reflektors emittiert und der Reflektor den Ultraschall in Richtung des Ultraschalldetektors zurückreflektiert; und ein Bestimmen, basierend auf dem Detektionssignal, ob eine Verformung des flexiblen Elements vorhanden ist, die anzeigt, dass durch das flexible Element ein Objekt eingeklemmt ist, das die Verformung verursacht.

Das Verfahren kann die Aspekte der in diesem Dokument beschriebenen Vorrichtung zur Einklemmerkennung an einem Transportmittel implementieren.

Gemäß einem weiteren unabhängigen Aspekt der vorliegenden Offenbarung ist ein Software (SW) Programm angegeben. Das SW Programm kann eingerichtet werden, um auf einem oder mehreren Prozessoren ausgeführt zu werden, und um dadurch das in diesem Dokument beschriebene Verfahren zur Einklemmerkennung an einem Transportmittel auszuführen.

Gemäß einem weiteren unabhängigen Aspekt der vorliegenden Offenbarung ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Verfahren zur Einklemmerkennung an einem Transportmittel auszuführen.

Gemäß einem weiteren unabhängigen Aspekt der vorliegenden Offenbarung ist eine Software mit Programmcode zur Durchführung des Verfahrens zur Einklemmerkennung an einem Transportmittel auszuführen, wenn die Software auf einer oder mehreren softwaregesteuerten Einrichtungen abläuft.

Gemäß einem weiteren unabhängigen Aspekt der vorliegenden Offenbarung ist ein System zur Einklemmerkennung an einem Transportmittel angegeben. Das System umfasst einen oder mehrere Prozessoren; und wenigstens einen Speicher, der mit dem einen oder den mehreren Prozessoren verbunden ist und Anweisungen enthält, die von dem einen oder den mehreren Prozessoren ausgeführt werden können, um das in diesem Dokument beschriebene Verfahren zur Einklemmerkennung an einem Transportmittel auszuführen.

Ein Prozessor bzw. ein Prozessormodul ist ein programmierbares Rechenwerk, also eine Maschine oder eine elektronische Schaltung, die gemäß übergebenen Befehlen andere Elemente steuert und dabei einen Algorithmus (Prozess) vorantreibt.

### Kurze Beschreibung der Zeichnungen

Ausführungsbeispiele der Offenbarung sind in den Figuren dargestellt und werden im Folgenden näher beschrieben. Es zeigen:
Figur 1 schematisch eine Vorrichtung zur Einklemmerkennung an einem Transportmittel gemäß Ausführungsformen der vorliegenden Offenbarung,
Figur 2 schematisch eine Vorrichtung zur Einklemmerkennung an einem Transportmittel gemäß weiteren Ausführungsformen der vorliegenden Offenbarung,
Figur 3 schematisch eine Vorrichtung zur Einklemmerkennung an einem Transportmittel gemäß weiteren Ausführungsformen der vorliegenden Offenbarung,
Figur 4 schematisch eine Signalverarbeitung in einer Vorrichtung zur Einklemmerkennung an einem Transportmittel gemäß Ausführungsformen der vorliegenden Offenbarung,
Figur 5 schematisch Ultraschallpulse und Reflektionen gemäß Ausführungsformen der vorliegenden Offenbarung,
Figuren 6A und 6B schematisch Ultraschallpulse und Reflektionen gemäß weiteren Ausführungsformen der vorliegenden Offenbarung,
Figur 7 schematisch Ultraschallpulse und Reflektionen gemäß weiteren Ausführungsformen der vorliegenden Offenbarung, und
Figur 8 ein Flussdiagram eines Verfahrens zur Einklemmerkennung an einem Transportmittel gemäß Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

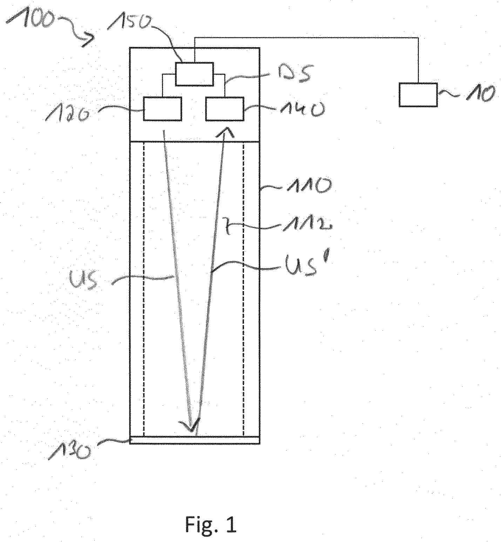

Figur 1 zeigt schematisch eine Vorrichtung 100 zur Einklemmerkennung an einem Transportmittel gemäß Ausführungsformen der vorliegenden Offenbarung.

Die Vorrichtung 100 umfasst ein flexibles Element 110, das einen Hohlraum 112 umfasst; einen Ultraschallsender 120, der am oder im Hohlraum 112 angeordnet ist, wobei der Ultraschallsender 120 eingerichtet ist, um Ultraschall US in den Hohlraum 112 zu emittieren; einen Reflektor 130, der am oder im Hohlraum 112 angeordnet ist, wobei der Reflektor 130 eingerichtet ist, um Ultraschall US zu reflektieren; einen Ultraschalldetektor 140, der am oder im Hohlraum 112 angeordnet ist, wobei der Ultraschalldetektor 140 eingerichtet ist, um den vom Ultraschallsender 120 emittierten und in der Vorrichtung 100 reflektierten Ultraschall US' zu detektieren und ein Detektionssignal DS zu erzeugen; und ein Prozessormodul 150, das eingerichtet ist, um basierend auf dem Detektionssignal DS des Ultraschalldetektors 140 zu bestimmen, ob eine Verformung des flexiblen Elements 110 vorhanden ist, die anzeigt, dass durch das flexible Element 110 ein Objekt eingeklemmt ist, das die Verformung verursacht.

Der Reflektor 130 dient dabei als Referenz, d.h. wenn der Ultraschall den Hohlraum 112 ungehindert durchläuft und vom Reflektor 130 zum Ultraschalldetektor 140 reflektiert wird, ist wie in Figur 1 gezeigt keine Verformung des flexiblen Elements 110 und damit keine Einklemmung eines Objekts vorhanden. Falls eine Vorformung des flexiblen Elements 110 vorhanden ist, behindert diese Verformung die ungestörte Ausbreitung des Ultraschalls und verändert das Detektionssignal DS am Ultraschalldetektor 140. Anders gesagt entspricht der am Ultraschalldetektor 140 empfangene Ultraschall nicht der Referenz. In Abhängigkeit einer Laufzeit und/oder einer Amplitude der am Ultraschalldetektor 140 empfangenen Reflektion(en) kann nun bestimmt werden, wie stark die Verformung ist und/oder ob ein Objekt durch das flexible Element 110 eingeklemmt ist.

Typischerweise ist der Ultraschallsender 120 eingerichtet, um Ultraschallpulse als den Ultraschall US zu emittieren. Jeder emittierte Ultraschallpuls weist dabei eine Pulsbreite und eine Amplitude auf, die je nach Anforderungen an die Vorrichtung 100 und/oder einem Anwendungsgebiet der Vorrichtung 100 geeignet gewählt werden können.

In einigen Ausführungsformen kann das flexible Element 110 eine Sicherheitsprofilleiste für eine Türe eines Transportmittels, wie einen Bus oder eine Bahn, sein. Falls die erfindungsgemäße Vorrichtung 100 aufgrund der Verformung des flexiblen Elements 110 erkennt, dass zum Beispiel ein Gegenstand oder eine Person durch sich schließende Türen eingeklemmt sind, kann die Vorrichtung 100 geeignete Gegenmaßnahmen veranlassen. Beispielsweise kann die Vorrichtung 100 Informationen in Bezug auf die erkennte Einklemmung an eine Türsteuerung 10 ausgeben, die das Schließen der Türen stoppt und die Türen wieder öffnet.

Das Prozessormodul 150 kann eingerichtet sein, um den Ultraschallsender 120 anzusteuern und das vom Ultraschalldetektor 140 empfangene Detektionssignal DS auszuwerten. Typischerweise ist das Prozessormodul 150 eine Mikrosteuerung (MCU).

Vorzugsweise ist das Prozessormodul 150 eingerichtet, um eine Kalibrierung der Vorrichtung 100 durchzuführen. Hierzu kann der Ultraschallsender 120 einen initialen Ultraschallimpuls aussenden. Falls die am Ultraschalldetektor 140 empfangene Antwort innerhalb eines vorbestimmten Erwartungsfensters liegt, kann die Vorrichtung 100 aktiviert bzw. scharfgeschaltet werden und Ultraschallpulse aussenden, um auf ein Einklemmen zu überwachen. Typischerweise erfolgt die Kalibrierung in Situationen, in denen keine Verformung oder Einklemmung vorliegt, wie zum Beispiel bei vollständig geöffneten Türen des Transportmittels und/oder während der Fahrt mit hoher Geschwindigkeit.

Das Prozessormodul 150 kann weiter eingerichtet sein, um den Ultraschallsender 120 und/oder den Ultraschalldetektor 140 zu überwachen. Beispielsweise kann nur dann, wenn durch den Ultraschallsender 120 ein Ultraschallpuls ausgesendet wurde, in einem bestimmten Zeitfenster eine Antwort am Ultraschalldetektor 140 erwartet werden. Hierdurch kann die Vorrichtung 100 effizient betrieben werden.

Ergänzend oder alternativ kann die Vorrichtung 100, insbesondere das Prozessormodul 150, eine Watchdog-Funktion umfassen, d.h. es kann z.B. regelmäßig eine Funktionsprüfung des Prozessormoduls 150 und/oder des Ultraschallsenders 120 und/oder des Ultraschalldetektors 140 durchgeführt werden. Bei einem erkannten Fehler kann das Prozessormodul 150 einen sicheren Zustand ausgeben oder anweisen. Beispielsweise kann die Türsteuerung 10 angewiesen werden, einen sicheren Zustand einzunehmen (z.B. Türen nicht öffnen oder nur ein manuelles Schließen der Türen z.B. durch einen Busfahrer zulassen).

In einigen Ausführungsformen kann das Prozessormodul 150 eingerichtet sein, um den Ultraschallsender 120 derart anzusteuern, dass der Ultraschallsender 120 den Ultraschall US situationsabhängig emittiert. Beispielsweise kann der Ultraschall US in Abhängigkeit eines Betriebszustands des Transportmittels und/oder eines Bewegungszustands des Transportmittels emittiert werden. Insbesondere kann der Ultraschall US nur dann emittiert werden, wenn die Gefahr einer Einklemmung eines Objekts durch das flexible Element 110 besteht. Damit kann die Vorrichtung 100 energieeffizient betrieben und eine Lebensdauer der Vorrichtung 100 erhöht werden.

Ein beispielhafter Betriebszustand, in dem der Ultraschall US emittiert wird, ist während des Schließens einer Tür des Transportmittels. Ein beispielhafter Bewegungszustand des Transportmittels, während dem der Ultraschall US emittiert wird, ist während eines Stillstands oder einer Langsamfahrt des Transportmittels. Beispielsweise kann das Transportmittel, insbesondere die Vorrichtung, einen Beschleunigungssensor und/oder einen Geschwindigkeitssensor umfassen, der ein Aktivieren und Deaktivieren der Ultraschallüberwachung steuert. Die Ultraschallüberwachung kann beispielsweise nur dann aktiviert werden, wenn das Transportmittel stillsteht oder sich mit weniger als z.B. 5 oder 10km/h bewegt.

In einigen Ausführungsformen kann während der Langsamfahrt eine Kalibrierung bzw. Selbstkalibrierung der Vorrichtung 100 durchgeführt werden. Die Zeit bis zum Stillstand kann beispielsweise ausreichen, um die Kalibrierung der Vorrichtung 100 zu beenden und die Ultraschallüberwachung zu beginnen.

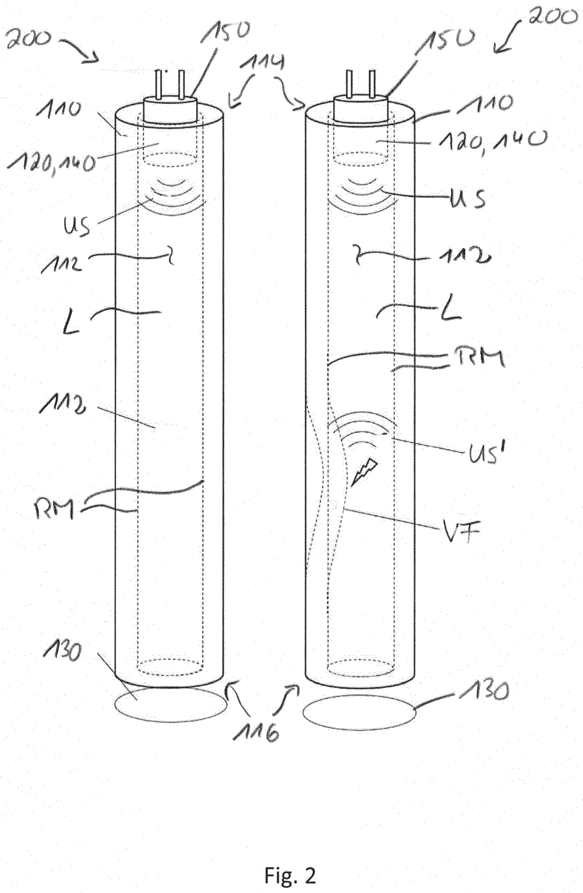

Figur 2 zeigt schematisch eine Vorrichtung 200 zur Einklemmerkennung an einem Transportmittel gemäß weiteren Ausführungsformen der vorliegenden Offenbarung. Links in der Figur 2 ist ein Zustand ohne Verformung gezeigt, und rechts in der Figur 2 ist ein Zustand mit einer Verformung VF gezeigt.

Ohne Verformung durchläuft der vom Ultraschallsender 120 emittierte Ultraschall US den Hohlraum 112 ungehindert und wird vom Reflektor 130 zum Ultraschalldetektor 140 zurückreflektiert. Falls eine Verformung VF des flexiblen Elements 110 vorhanden ist, behindert diese Verformung VF die ungestörte Ausbreitung des Ultraschalls bzw. reflektiert zumindest einen Teil des vom Ultraschallsender 120 emittierten Ultraschalls US und verändert so das Detektionssignal am Ultraschalldetektor 140.

Die Verformung VF kann eine Querschnittsverengung des Hohlraums 112 sein.

Bei einer geringen Verformung VF des flexiblen Elements 110 kann der vom Ultraschallsender 120 emittierte Ultraschall US teilweise von der Verformung VF und teilweise vom Reflektor reflektiert werden. Der Ultraschalldetektor 140 empfängt damit eine Reflektion von der Verformung VF und eine Reflektion vom Reflektor 130. Bei einer starken Verformung VF hingegen kann der vom Ultraschallsender 120 emittierte Ultraschall US im Wesentlichen vollständig von der Verformung VF reflektiert werden. Anders gesagt erreicht der vom Ultraschallsender 120 emittierte Ultraschall US nicht den Reflektor 130 und der Ultraschalldetektor 140 empfängt damit nur eine Reflektion von der Verformung VF und keine Reflektion vom Reflektor 130.

In einigen Ausführungsformen können der Ultraschallsender 120 und der Ultraschalldetektor 140 in einer Funktionseinheit integriert sein.

Der Hohlraum 112 des flexiblen Elements 110 kann in beispielhaften Ausführungsformen einen ersten Abschnitt 114 und einen dem ersten Abschnitt 114 gegenüberliegenden zweiten Abschnitt 116 aufweisen. Der erste Abschnitt 114 kann ein erstes Ende und/oder eine erste Öffnung des Hohlraums 112 sein, und der zweite Abschnitt 116 kann ein zweites Ende und/oder eine zweite Öffnung des Hohlraums 112 sein.

Der Ultraschallsender 120 und der Ultraschalldetektor 140, insbesondere der Transducer, können im oder am ersten Abschnitt 114 (z.B. in oder an der ersten Öffnung) angeordnet sein. Der Reflektor 130 kann im oder am zweiten Abschnitt 116 (z.B. in oder an der zweiten Öffnung) angeordnet sein. Der Reflektor 130 ist dem Ultraschallsender 120 und dem Ultraschalldetektor 140, insbesondere dem Transducer, gegenüberliegend angeordnet, so dass der Ultraschallsender 120 den Ultraschall US bzw. die Ultraschallpulse in Richtung des Reflektors 130 emittiert und der Reflektor 130 den Ultraschall US bzw. die Ultraschallpulse in Richtung des Ultraschalldetektors 140 zurückreflektiert.

In einigen Ausführungsformen können der Ultraschallsender 120 und der Ultraschalldetektor 140 (und optional das Prozessormodul) in ein erstes Verschlusselement 150 integriert, das das erste Ende und/oder die erste Öffnung des Hohlraums 112 verschließt. Das erste Verschlusselement 150 kann zum Beispiel eine Kappe oder ein Stopfen sein.

Ergänzend oder alternativ kann der Reflektor 130 (und optional das Prozessormodul) in ein zweiten Verschlusselement (nicht gezeigt) integriert sein, das das zweite Ende und/oder die zweite Öffnung des Hohlraums 112 verschließt. Das zweite Verschlusselement kann zum Beispiel eine Kappe oder ein Stopfen sein.

In einigen Ausführungsformen kann der Hohlraum 112 eine längliche Form mit einer Längserstreckung oder Längsachse aufweisen. Der erste Abschnitt 112 mit dem Ultraschallsender 120 und dem Ultraschalldetektor 140, insbesondere dem Transducer, sowie der zweite Abschnitt 116 mit dem Reflektor 130 können entlang der Längsachse und beabstandet voneinander angeordnet sein.

Vorzugsweise weist der Hohlraum 112 in einem unverformten Zustand einen runden Querschnitt auf. Der Querschnitt ist dabei in einer Ebene senkrecht zur Längserstreckung oder Längsachse definiert. Beispielsweise kann der Hohlraum 112 zylindrisch ausgebildet sein. In einigen Ausführungsformen kann der Hohlraum 112 mit Luft L gefüllt sein.

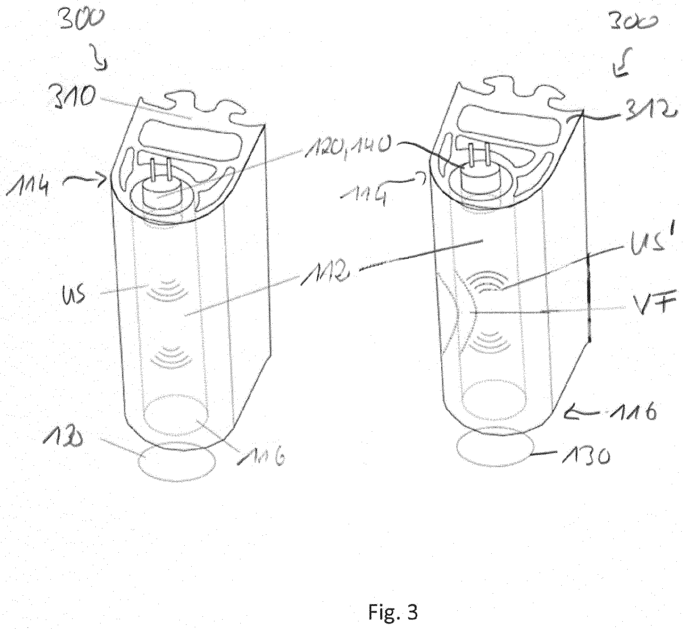

In einigen Ausführungsformen kann eine Innenwand des Hohlraums 112 mit einem reflektierenden Material RM beschichtet sein. Durch die Beschichtung mit dem reflektierenden Material RM kann eine verbesserte Reflektion des Ultraschalls z.B. an einer Verformung ermöglicht werden
Figur 3 zeigt schematisch eine Vorrichtung 300 zur Einklemmerkennung an einem Transportmittel gemäß weiteren Ausführungsformen der vorliegenden Offenbarung.

In einigen Ausführungsformen kann das flexible Element 312 ein Profil, insbesondere ein Gummiprofil, sein. Das Profil kann eine oder mehrere Vorsprünge und/oder eine oder mehrere Luftkammern und/oder eine oder mehrere Profillippen, die einen flexiblen Kontaktbereich bilden, aufweisen. Das flexible Element 312 kann beispielsweise eine Sicherheitsprofilleiste, insbesondere für eine Türe eines Transportmittels, sein.

Gemäß einigen Ausführungsformen, die mit anderen hier beschriebenen Ausführungsformen kombiniert werden können, besteht das flexible Element 312 aus Kunststoff, insbesondere aus Gummi wie zum Beispiel schwarzem Gummi.

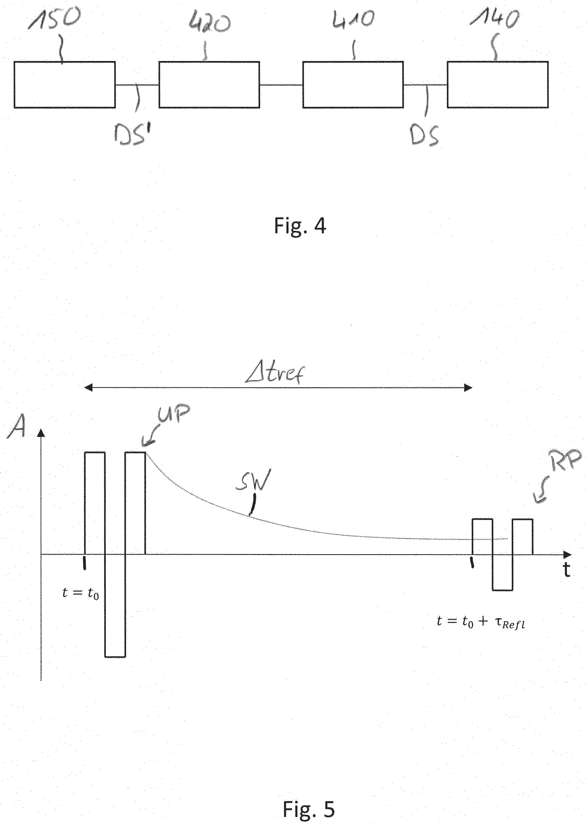

Figur 4 zeigt schematisch eine Signalverarbeitung in einer Vorrichtung zur Einklemmerkennung an einem Transportmittel gemäß Ausführungsformen der vorliegenden Offenbarung.

Der Ultraschalldetektor 140 detektiert den reflektierten Ultraschall und gibt ein Detektionssignal DS aus. Das Detektionssignal DS kann durch wenigstens ein Signalverarbeitungsmodul 410, 420 weiterverarbeitet werden, um ein Detektionssignal DS' zu erzeugen, das dann an das Prozessormodul 150 zur Auswertung ausgegeben wird.

In einigen Ausführungsformen kann das wenigstens eine Signalverarbeitungsmodul einen Verstärker 410 umfassen, der das Detektionssignal DS des Ultraschalldetektors 140 empfängt und verstärkt. Der Verstärker 410 kann neben einer Verstärkung auch filternde Eigenschaften und bewusste Nichtlinearitäten, wie eine Amplitudenbegrenzung, aufweisen, um das Detektionssignal DS für nachfolgende Module zu konditionieren.

In einigen Ausführungsformen kann das wenigstens eine Signalverarbeitungsmodul einen Analog/Digital-Wandler 420 umfassen, der das vom Verstärker 410 verstärkte Detektionssignal empfängt. Der Analog/Digital-Wandler 420 kann als separates Modul vorgesehen sein, wie es in der Figur 4 dargestellt ist. Alternativ kann der Analog/Digital-Wandler 420 in das Prozessormodul 150 integriert sein.

Alternativ zum Analog/Digital-Wandler kann das wenigstens eine Signalverarbeitungsmodul einen Komparator 420 umfassen, der das vom Verstärker 410 verstärkte Detektionssignal empfängt. Der Komparator 420 kann als separates Modul vorgesehen sein, wie es in der Figur 4 dargestellt ist. Alternativ kann der Komparator 420 in das Prozessormodul 150 integriert sein.

Figur 5 zeigt schematisch Ultraschallpulse und Reflektionen gemäß Ausführungsformen der vorliegenden Offenbarung.

Typischerweise ist der Ultraschallsender eingerichtet, um Ultraschallpulse UP als den Ultraschall zu emittieren. Jeder emittierte Ultraschallpuls UP weist dabei in Bezug auf die Zeitachse t eine Pulsbreite und eine Amplitude A auf.

Verformungen des flexiblen Elements, wie zum Beispiel Querschnittsverengungen, können basierend auf einer Laufzeit der am Ultraschalldetektor empfangenen reflektierten Ultraschallpulse RP erkannt werden. Die Laufzeit ist dabei im Allgemeinen als eine Zeitspanne zwischen der Aussendung des Ultraschallpulses UP durch den Ultraschallsender bei t=t₀ und dem Empfang des reflektierten Ultraschallpulses RP durch den Ultraschalldetektor bei t=t₀+τ_{Refl} definiert. Eine Laufzeit zwischen dem Ultraschallsender und dem Ultraschalldetektor eines am Reflektor reflektieren Ultraschallpulses RP kann als Referenz bzw. als Referenzlaufzeit Δtref (z.B. während einer Kalibrierung bestimmt) definiert werden.

Insbesondere können die vom Ultraschallsender in den Hohlraum des flexiblen Elements emittierten Ultraschallpulse UP in Abhängigkeit von Verformungen an verschiedenen Orten im Hohlraum reflektiert werden, was zu unterschiedlichen Laufzeiten führt, die wiederum Aufschluss auf die Verformung des flexiblen Elements geben. Beispielsweise kann eine Verformung erkannt werden, falls die Laufzeit eines am Ultraschalldetektor empfangenen reflektierten Ultraschallpulses RP kürzer als die Referenzlaufzeit Δtref ist.

Optional können Verformungen des flexiblen Elements, wie zum Beispiel Querschnittsverengungen, weiter basierend auf einer Amplitude der am Ultraschalldetektor empfangenen reflektierten Ultraschallpulse RP erkannt werden. Beispielsweise kann eine Verformung erkannt werden, wenn die Amplitude der am Ultraschalldetektor mit der Referenzlaufzeit Δtref empfangenen Reflektion RP des Ultraschallpulses UP kleiner als eine Referenzamplitude (z.B. während einer Kalibrierung bestimmt) ist. Die Referenzamplitude kann dabei einer Amplitude entsprechen, die auftritt, falls keine Verformung des flexiblem Elements vorhanden ist und der Ultraschallpuls UP den Reflektor ungehindert erreicht. Falls die Amplitude des Pulses RP mit der Referenzlaufzeit Δtref geringer als die Referenzamplitude ist, kann dies angeben, dass ein Teil des Ultraschallpulses UP durch einen verformten Bereich des flexiblen Elements reflektiert wurde, wobei trotzdem noch ein Teil des Ultraschallpulses UP den Reflektor erreicht. Dies ist ein Hinweis auf eine teilweise Verformung des flexiblen Elements.

In einigen Ausführungsformen kann basierend auf einer Abweichung der Amplitude der Reflektion RP von der Referenzamplitude ein Maß der Verformung des flexiblen Elements bestimmt werden. Ist die Abweichung gering, liegt eine geringfügige Verformung vor, da ein großer Teil des Ultraschallpulses UP den Reflektor erreicht. Ist die Abweichung hingegen groß, liegt eine starke Verformung vor, da nur ein kleiner (oder gar kein) Teil des Ultraschallpulses UP den Reflektor erreicht. Im Grenzfall kann bei maximaler Verformung kein Ultraschall den Reflektor erreichen, so dass bei der Referenzlaufzeit Δtref kein Detektionssignal auftritt.

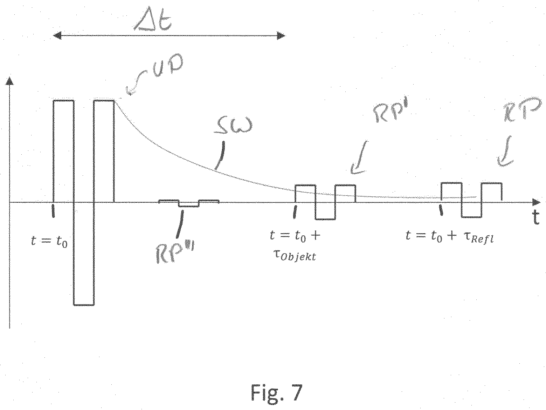

Im Beispiel der Figur 5 ist eine mit der Laufzeit veränderliche Schwelle SW gezeigt. In Bezug auf die Schwelle SW wird auf die Ausführungen zur Figur 7 verwiesen.

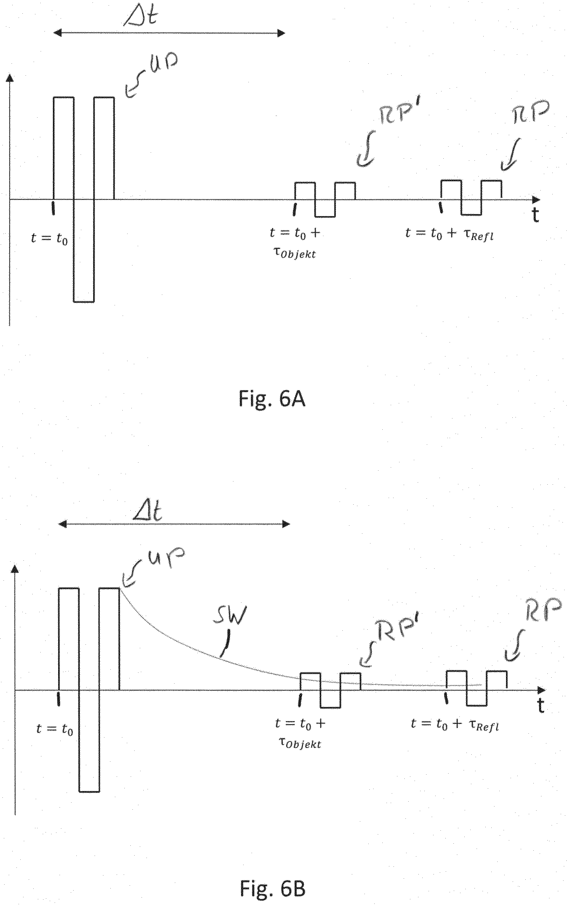

Figuren 6A und 6B zeigen schematisch Ultraschallpulse und Reflektionen gemäß weiteren Ausführungsformen der vorliegenden Offenbarung. Figur 6A zeigt einen Fall ohne eine Schwelle, und Figur 6B zeigt einen Fall mit einer Schwelle SW. In Bezug auf die Schwelle SW wird auf die Ausführungen zur Figur 7 verwiesen.

Im Beispiel der Figuren 6A und 6B ist eine teilweise Verformung des flexiblen Elements vorhanden, so dass ein Teil des Ultraschallpulses UP am Reflektor und ein anderer Teil des Ultraschallpulses UP an der Verformung reflektiert wird. Der am Reflektor reflektierte Teil des Ultraschallpulses UP erzeugt die Reflektion RP bei der Referenzlaufzeit. Der an der Verformung reflektierte Teil des Ultraschallpulses UP erzeugt die Reflektion RP' mit der im Vergleich zur Referenzlaufzeit verkürzten Laufzeit Δt.

Basierend auf der Laufzeit und optional der Amplitude der beiden Reflektionen RP und RP' kann nun bestimmt werden, dass eine Verformung vorliegt und eine Einklemmung erkannt werden.

Figur 7 zeigt schematisch Ultraschallpulse und Reflektionen gemäß weiteren Ausführungsformen der vorliegenden Offenbarung. Im Unterschied zu den Figuren 6A und 6B ist zusätzlich zu den beiden Reflektionen RP und RP' noch eine weitere Reflektion RP" vorhanden.

In einigen Ausführungsformen kann eine Schwelle definiert werden, die angibt, ab welcher Amplitude eine Reflektion zur Einklemmerkennung verwendet wird. Dies betrifft insbesondere Reflektionen mit Laufzeiten, die kleiner als die Referenzlaufzeiten Δtref sind. Ist die Amplitude einer Reflektion mit Δt < Δtref kleiner als die Schwelle (die weitere Reflektion PP" in Figur 7), kann die Reflektion verworfen werden, da zum Beispiel davon ausgegangen werden kann, dass es sich um eine irrelevante und/oder permanente Verformung des flexiblen Elements z.B. aus Verschleißgründen handelt und nicht um eine Einklemmung eines Objekts oder einer Person. Zudem kann die Schwelle dazu eingesetzt werden, um einen Einfluss von Extrusionstoleranzen bei der Herstellung des flexiblen Elements zu verringern.

Im Beispiel der Figuren 5 bis 7 ist die Schwelle eine mit der Laufzeit veränderliche Schwelle SW. Insbesondere kann die Schwelle SW mit zunehmender Laufzeit abnehmen.

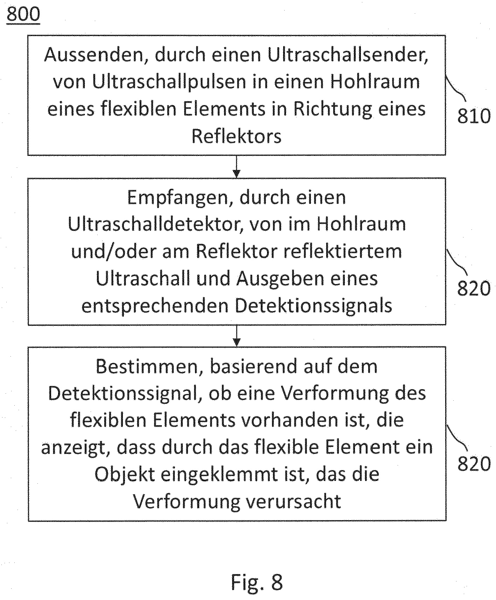

Figur 8 zeigt schematisch ein Flussdiagramm eines Verfahrens 800 zur Einklemmerkennung an einem Transportmittel gemäß Ausführungsformen der vorliegenden Offenbarung. Das Verfahren 800 kann durch eine entsprechende Software implementiert werden, die durch einen oder mehrere Prozessoren (z.B. eine CPU) ausführbar ist.

Das Verfahren 800 umfasst im Block 810 ein Aussenden, durch einen Ultraschallsender, von Ultraschallpulsen in einen Hohlraum eines flexiblen Elements in Richtung eines Reflektors; im Block 820 ein Empfangen, durch einen Ultraschalldetektor, von im Hohlraum und/oder am Reflektor reflektiertem Ultraschall und Ausgeben eines entsprechenden Detektionssignals; und im Block 830 ein Bestimmen, basierend auf dem Detektionssignal, ob eine Verformung des flexiblen Elements vorhanden ist, die anzeigt, dass durch das flexible Element ein Objekt eingeklemmt ist, das die Verformung verursacht.

Erfindungsgemäß wird in den Hohlraum des flexiblen Elements Ultraschall abgestrahlt, dort reflektiert und detektiert. Basierend auf den detektierten Reflektionen des Ultraschalls wird bestimmt, ob eine Verformung des flexiblen Elements vorliegt. Hierzu dient der Reflektor als Referenz, d.h. wenn der Ultraschall den Hohlraum ungehindert durchläuft und vom Reflektor zurück zum Ultraschalldetektor reflektiert wird, ist keine Verformung und damit keine Einklemmung eines Objekts vorhanden. Entspricht der am Ultraschalldetektor empfangene Ultraschall nicht dieser Referenz, kann z.B. in Abhängigkeit einer Laufzeit und/oder einer Amplitude der am Ultraschalldetektor empfangenen Reflektionen bestimmt werden, wie stark die Verformung ist und ob sich daraus ableiten lässt, dass ein Objekt durch das flexible Element eingeklemmt ist. Die Kombination aus Ultraschallsender, Reflektor und Ultraschalldetektor ermöglicht dabei eine zuverlässige und kostengünstige Einklemmerkennung.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Vorrichtung (100, 200, 300) zur Einklemmerkennung an einem Transportmittel, umfassend:
ein flexibles Element (110, 310), das einen Hohlraum (112) umfasst;
einen Ultraschallsender (120), der am oder im Hohlraum (112) angeordnet ist, wobei der Ultraschallsender (120) eingerichtet ist, um Ultraschall in den Hohlraum (112) zu emittieren;
einen Reflektor (130), der am oder im Hohlraum (112) angeordnet ist, wobei der Reflektor (130) eingerichtet ist, um Ultraschall zu reflektieren, und wobei der Reflektor (130) eine Referenz bereitstellt, anhand derer Verformungen des flexiblen Elements (110, 310) erkennbar sind;
einen Ultraschalldetektor (140), der am oder im Hohlraum (112) angeordnet ist, wobei der Ultraschalldetektor (140) eingerichtet ist, um den vom Ultraschallsender (120) emittierten und in der Vorrichtung (100) reflektierten Ultraschall zu detektieren und ein Detektionssignal (DS) zu erzeugen; und
ein Prozessormodul (150), das eingerichtet ist, um basierend auf dem Detektionssignal (DS) des Ultraschalldetektors (140) zu bestimmen, ob eine Verformung (VF) des flexiblen Elements (110, 310) vorhanden ist, die anzeigt, dass durch das flexible Element (110, 310) ein Objekt eingeklemmt ist, das die Verformung (VF) verursacht,
wobei der Ultraschallsender (120) und der Ultraschalldetektor (140) einen Transducer bilden, und wobei der Reflektor (130) dem Transducer gegenüberliegend angeordnet ist, so dass der Ultraschallsender (120) den Ultraschall in Richtung des Reflektors (130) emittiert und der Reflektor (130) den Ultraschall in Richtung des Ultraschalldetektors (140) zurückreflektiert.

2. Die Vorrichtung (100, 200, 300) nach Anspruch 1, wobei der Ultraschallsender (120) eingerichtet ist, um Ultraschallpulse (UP) zu emittieren.

3. Die Vorrichtung (100, 200, 300) nach Anspruch 1 oder 2, wobei der Ultraschallsender (120) eingerichtet ist, um:
- die Ultraschallpulse (UP) in vorbestimmten Zeitintervallen zu emittieren; und/oder
- die Ultraschallpulse (UP) situationsabhängig zu emittieren, insbesondere basierend auf einer Bewegung des Transportmittels.

4. Die Vorrichtung (100, 200, 300) nach Anspruch 2 oder 3, wobei das Prozessormodul (150) eingerichtet ist, um basierend auf einer Laufzeit und/oder einer Amplitude der in der Vorrichtung (100, 200, 300) reflektierten und am Ultraschalldetektor (140) empfangenen Ultraschallpulse (UP) zu bestimmen, ob die Verformung (VF) des flexiblen Elements (110, 310) vorhanden ist.

5. Die Vorrichtung (100, 200, 300) nach Anspruch 4, wobei das Prozessormodul (150) eingerichtet ist, um zu bestimmen, dass durch das flexible Element (110, 310) ein Objekt eingeklemmt ist, das die Verformung (VF) verursacht, falls:
- die Laufzeit einer am Ultraschalldetektor (140) empfangenen Reflektion (RP') eines Ultraschallpulses (UP) kürzer als eine Referenzlaufzeit (Δtref) ist, insbesondere wobei die Referenzlaufzeit (Δtref) einer Laufzeit zwischen dem Ultraschallsender (120) und dem Ultraschalldetektor (140) eines am Reflektor (130) reflektieren Ultraschallpulses (RP) entspricht; und/oder
- die Amplitude der am Ultraschalldetektor (140) mit der Referenzlaufzeit (Δtref) empfangenen Reflektion (RP, RP') des Ultraschallpulses (UP) kleiner als eine Referenzamplitude ist; und/oder
- zwei Reflektionen (RP, RP') des Ultraschallpulses (UP) mit unterschiedlichen Laufzeiten erfasst werden.

6. Die Vorrichtung (100, 200, 300) nach einem der Ansprüche 1 bis 5, wobei das Prozessormodul (150) eingerichtet ist, um eine Kalibrierung der Vorrichtung (100, 200, 300) durchzuführen, insbesondere bei einem Stillstand des Transportmittels und/oder einer Langsamfahrt des Transportmittels.

7. Die Vorrichtung (100, 200, 300) nach einem der Ansprüche 1 bis 6, wobei:
der Ultraschallsender (120) und der Ultraschalldetektor (130) in einer Funktionseinheit integriert sind; und/oder
der Ultraschallsender (120) und der Ultraschalldetektor (130) eine Sende- und Empfängereinheit bilden.

8. Die Vorrichtung (100, 200, 300) nach einem der Ansprüche 1 bis 7, wobei der Hohlraum (112) einen ersten Abschnitt (114) und einen dem ersten Abschnitt (114) gegenüberliegenden zweiten Abschnitt (116) aufweist, und wobei der Ultraschallsender (120) und der Ultraschalldetektor (140) im oder am ersten Abschnitt (114) angeordnet sind, und wobei der Reflektor (130) im oder am zweiten Abschnitt (116) angeordnet ist, insbesondere wobei der erste Abschnitt (114) ein erstes Ende und/oder eine erste Öffnung des Hohlraums (112) ist und/oder der zweite Abschnitt (116) ein zweites Ende und/oder eine zweite Öffnung des Hohlraums (112) ist.

9. Die Vorrichtung (100, 200, 300) nach einem der Ansprüche 1 bis 8, wobei:
der Hohlraum (112) eine längliche Form aufweist; und/oder
der Hohlraum (112) einen runden Querschnitt aufweist; und/oder
der Hohlraum (112) zylindrisch ausgebildet ist; und/oder
der Hohlraum (112) mit Luft (L) gefüllt ist; und/oder
eine Innenwand des Hohlraums (112) mit einem reflektierenden Material (RM) beschichtet ist.

10. Die Vorrichtung (100, 200, 300) nach einem der Ansprüche 1 bis 9, wobei:
das flexible Element (110, 310) aus Kunststoff besteht, insbesondere aus Gummi; und/oder
das flexible Element (110, 310) ein Profil ist, insbesondere ein Gummiprofil, und/oder
das flexible Element (110, 310) eine Dichtung ist.

11. Die Vorrichtung (300) nach einem der Ansprüche 1 bis 10, wobei das flexible Element (310) eine Sicherheitsprofilleiste ist, insbesondere für eine Türe eines Transportmittels.

12. Tür für ein Transportmittel mit einer Vorrichtung (100, 200, 300) nach einem der vorhergehenden Ansprüche.

13. Transportmittel, umfassend die Tür nach Anspruch 12.

14. Verfahren (800) zur Einklemmerkennung an einem Transportmittel, umfassend:
Aussenden (810), durch einen Ultraschallsender, von Ultraschallpulsen in einen Hohlraum eines flexiblen Elements in Richtung eines Reflektors, und wobei der Reflektor (130) eine Referenz bereitstellt, anhand derer Verformungen des flexiblen Elements (110, 310) erkennbar sind;
Empfangen (820), durch einen Ultraschalldetektor, von im Hohlraum und/oder am Reflektor reflektiertem Ultraschall und Ausgeben eines entsprechenden Detektionssignals, wobei der Ultraschallsender (120) und der Ultraschalldetektor (140) einen Transducer bilden, und wobei der Reflektor (130) dem Transducer gegenüberliegend angeordnet ist, so dass der Ultraschallsender (120) den Ultraschall in Richtung des Reflektors (130) emittiert und der Reflektor (130) den Ultraschall in Richtung des Ultraschalldetektors (140) zurückreflektiert; und
Bestimmen (830), basierend auf dem Detektionssignal, ob eine Verformung des flexiblen Elements vorhanden ist, die anzeigt, dass durch das flexible Element ein Objekt eingeklemmt ist, das die Verformung verursacht.

15. Speichermedium, umfassend ein Software-Programm, das eingerichtet ist, um auf einem oder mehreren Prozessoren ausgeführt zu werden, und Befehle umfasst, die bewirken, dass die Vorrichtung nach einem der Ansprüche 1 bis 11 die Schritte des Verfahrens (800) gemäß Anspruch 14 ausführt.

## Claims

1. Device (100, 200, 300) for detecting jamming on a means of transport, comprising:
a flexible element (110, 310) having a cavity (112);
an ultrasonic transmitter (120) arranged on or in the cavity (112), wherein the ultrasonic transmitter (120) is configured to emit ultrasound into the cavity (112);
a reflector (130) arranged on or in the cavity (112), wherein the reflector (130) is configured to reflect ultrasound, and wherein the reflector (130) provides a reference by means of which deformations of the flexible element (110, 310) can be detected;
an ultrasonic detector (140) arranged on or in the cavity (112), wherein the ultrasonic detector (140) is configured to detect the ultrasound emitted by the ultrasonic transmitter (120) and reflected in the device (100) and to generate a detection signal (DS); and
a processor module (150) configured to determine, on the basis of the detection signal (DS) of the ultrasonic detector (140), whether a deformation (VF) of the flexible element (110, 310) is present, indicating that an object is jammed by the flexible element (110, 310), causing the deformation (VF),
wherein the ultrasonic transmitter (120) and the ultrasonic detector (140) form a transducer, and wherein the reflector (130) is arranged opposite the transducer, so that the ultrasonic transmitter (120) emits the ultrasound in the direction of the reflector (130) and the reflector (130) reflects the ultrasound back in the direction of the ultrasonic detector (140).

2. The device (100, 200, 300) according to claim 1, wherein the ultrasonic transmitter (120) is configured to emit ultrasonic pulses (UP).

3. The device (100, 200, 300) according to claim 1 or 2, wherein the ultrasonic transmitter (120) is configured:
- to emit the ultrasonic pulses (UP) at predetermined time intervals; and/or
- to emit the ultrasonic pulses (UP) depending on the situation, in particular on the basis of a movement of the means of transport.

4. The device (100, 200, 300) according to claim 2 or 3, wherein the processor module (150) is configured to determine whether the deformation (VF) of the flexible element (110, 310) is present on the basis of a propagation time and/or an amplitude of the ultrasonic pulses (UP) reflected in the device (100, 200, 300) and received at the ultrasonic detector (140).

5. The device (100, 200, 300) according to claim 4, wherein the processor module (150) is configured to determine that an object is jammed by the flexible element (110, 310) and is causing the deformation (VF) if:
- the propagation time of a reflection (RP') of an ultrasonic pulse (UP) received at the ultrasonic detector (140) is shorter than a reference propagation time (Δtref), in particular wherein the reference propagation time (Δtref) corresponds to a propagation time between the ultrasonic transmitter (120) and the ultrasonic detector (140) of an ultrasonic pulse (RP) reflected at the reflector (130); and/or
- the amplitude of the reflection (RP, RP') of the ultrasonic pulse (UP) received at the ultrasonic detector (140) having the reference propagation time (Δtref) is smaller than a reference amplitude; and/or
- two reflections (RP, RP') of the ultrasonic pulse (UP) having different propagation times are recorded.

6. The device (100, 200, 300) according to any of claims 1 to 5, wherein the processor module (150) is configured to perform a calibration of the device (100, 200, 300), in particular when the means of transport is at a standstill and/or when the means of transport is traveling slowly.

7. The device (100, 200, 300) according to any of claims 1 to 6, wherein:
the ultrasonic transmitter (120) and the ultrasonic detector (130) are integrated into a functional unit; and/or
the ultrasonic transmitter (120) and the ultrasonic detector (130) form a transmitting and receiving unit.

8. The device (100, 200, 300) according to any of claims 1 to 7, wherein the cavity (112) has a first portion (114) and a second portion (116) opposite the first portion (114), and wherein the ultrasonic transmitter (120) and the ultrasonic detector (140) are arranged in or on the first portion (114), and wherein the reflector (130) is arranged in or on the second portion (116), in particular wherein the first portion (114) is a first end and/or a first opening of the cavity (112) and/or the second portion (116) is a second end and/or a second opening of the cavity (112).

9. The device (100, 200, 300) according to any of claims 1 to 8, wherein:
the cavity (112) has an elongate shape; and/or
the cavity (112) has a round cross-section; and/or
the cavity (112) is cylindrical; and/or
the cavity (112) is filled with air (L); and/or
an inner wall of the cavity (112) is coated with a reflective material (RM).

10. The device (100, 200, 300) according to any of claims 1 to 9, wherein:
the flexible element (110, 310) is made of a plastics material, in particular rubber; and/or
the flexible element (110, 310) is a profile, in particular a rubber profile; and/or the flexible element (110, 310) is a seal.

11. The device (300) according to any of claims 1 to 10, wherein the flexible element (310) is a safety profile strip, in particular for a door of a means of transport.

12. Door for a means of transport comprising a device (100, 200, 300) according to any of the preceding claims.

13. Means of transport comprising the door according to claim 12.

14. Method (800) for detecting jamming on a means of transport, comprising:
emitting (810), by an ultrasonic transmitter, ultrasonic pulses into a cavity of a flexible element in the direction of a reflector, and wherein the reflector (130) provides a reference by means of which deformations of the flexible element (110, 310) can be detected;
receiving (820), by an ultrasonic detector, ultrasound reflected in the cavity and/or at the reflector and outputting a corresponding detection signal, wherein the ultrasonic transmitter (120) and the ultrasonic detector (140) form a transducer, and wherein the reflector (130) is arranged opposite the transducer, so that the ultrasonic transmitter (120) emits the ultrasound in the direction of the reflector (130) and the reflector (130) reflects the ultrasound back in the direction of the ultrasonic detector (140); and
determining (830), on the basis of the detection signal, whether a deformation of the flexible element is present, which indicates that an object causing the deformation is jammed by the flexible element..

15. Storage medium comprising a software program configured to be executed on one or more processors and comprising instructions causing the device according to any of claims 1 to 11 to perform the steps of the method (800) of claim 14.

## Revendications

1. Dispositif (100, 200, 300) permettant la reconnaissance d'un coincement sur un moyen de transport, comprenant :
un élément flexible (110, 310) comprenant une cavité (112) ;
un émetteur d'ultrasons (120) qui est disposé sur ou dans la cavité (112), dans lequel l'émetteur d'ultrasons (120) est conçu pour émettre des ultrasons dans la cavité (112) ;
un réflecteur (130) qui est disposé sur ou dans la cavité (112), dans lequel le réflecteur (130) est conçu pour réfléchir les ultrasons, et dans lequel le réflecteur (130) fournit une référence à partir de laquelle des déformations de l'élément flexible (110, 310) peuvent être reconnues ;
un détecteur d'ultrasons (140) qui est disposé sur ou dans la cavité (112), dans lequel le détecteur d'ultrasons (140) est conçu pour détecter les ultrasons émis par l'émetteur d'ultrasons (120) et réfléchis dans le dispositif (100) et pour générer un signal de détection (DS) ; et
un module processeur (150) qui est conçu pour déterminer, sur la base du signal de détection (DS) du détecteur d'ultrasons (140), si une déformation (VF) de l'élément flexible (110, 310) est présente, qui indique qu'un objet provoquant la déformation (VF) est coincé par l'élément flexible (110, 310),
dans lequel l'émetteur d'ultrasons (120) et le détecteur d'ultrasons (140) forment un transducteur, et dans lequel le réflecteur (130) est disposé en face du transducteur, de telle sorte que l'émetteur d'ultrasons (120) émet les ultrasons en direction du réflecteur (130) et que le réflecteur (130) reflète en retour les ultrasons en direction du détecteur d'ultrasons (140).

2. Dispositif (100, 200, 300) selon la revendication 1, dans lequel l'émetteur d'ultrasons (120) est conçu pour émettre des impulsions ultrasonores (UP).

3. Dispositif (100, 200, 300) selon la revendication 1 ou 2, dans lequel l'émetteur d'ultrasons (120) est conçu pour :
- émettre les impulsions ultrasonores (UP) à des intervalles de temps prédéterminés ; et/ou
- émettre les impulsions ultrasonores (UP) en fonction de la situation, en particulier sur la base d'un mouvement du moyen de transport.

4. Dispositif (100, 200, 300) selon la revendication 2 ou 3, dans lequel le module processeur (150) est conçu pour déterminer, sur la base d'un temps de propagation et/ou d'une amplitude des impulsions ultrasonores (UP) réfléchies dans le dispositif (100, 200, 300) et reçues par le détecteur d'ultrasons (140), si la déformation (VF) de l'élément flexible (110, 310) est présente.

5. Dispositif (100, 200, 300) selon la revendication 4, dans lequel le module processeur (150) est conçu pour déterminer qu'un objet provoquant la déformation (VF) est coincé par l'élément flexible (110, 310) si :
- la temps de propagation d'une réflexion (RP') d'une impulsion ultrasonore (UP) reçue sur le détecteur d'ultrasons (140) est inférieur à un temps de propagation de référence (Δtref), en particulier dans lequel le temps de propagation de référence (Δtref) correspond à un temps de propagation entre l'émetteur d'ultrasons (120) et le détecteur d'ultrasons (140) d'une impulsion ultrasonore (RP) réfléchie sur le réflecteur (130) ; et/ou
- l'amplitude de la réflexion (RP, RP') de l'impulsion ultrasonore (UP) reçue sur le détecteur d'ultrasons (140) avec le temps de propagation de référence (Δtref) est inférieure à une amplitude de référence ; et/ou
- deux réflexions (RP, RP') de l'impulsion ultrasonore (UP) sont captées avec des temps de propagation différents.

6. Dispositif (100, 200, 300) selon l'une des revendications 1 à 5, dans lequel le module processeur (150) est conçu pour exécuter un calibrage du dispositif (100, 200, 300), en particulier lors d'un arrêt du moyen de transport et/ou d'un déplacement lent du moyen de transport.

7. Dispositif (100, 200, 300) selon l'une des revendications 1 à 6, dans lequel :
l'émetteur d'ultrasons (120) et le détecteur d'ultrasons (130) sont intégrés dans une unité fonctionnelle ; et/ou
l'émetteur d'ultrasons (120) et le détecteur d'ultrasons (130) forment une unité d'émission et de réception.

8. Dispositif (100, 200, 300) selon l'une des revendications 1 à 7, dans lequel la cavité (112) présente une première section (114) et une seconde section (116) opposée à la première section (114), et dans lequel l'émetteur d'ultrasons (120) et le détecteur d'ultrasons (140) sont disposés dans ou sur la première section (114), et dans lequel le réflecteur (130) est disposé dans ou sur la seconde section (116), en particulier dans lequel la première section (114) est une première extrémité et/ou une première ouverture de la cavité (112) et/ou la seconde section (116) est une seconde extrémité et/ou une seconde ouverture de la cavité (112).

9. Dispositif (100, 200, 300) selon l'une des revendications 1 à 8, dans lequel :
la cavité (112) présente une forme allongée ; et/ou
la cavité (112) présente une section transversale circulaire ; et/ou
la cavité (112) est réalisée sous forme cylindrique ; et/ou
la cavité (112) est remplie d'air (L) ; et/ou
une paroi intérieure de la cavité (112) est revêtue d'un matériau réfléchissant (RM).

10. Dispositif (100, 200, 300) selon l'une des revendications 1 à 9, dans lequel :
l'élément flexible (110, 310) est constitué de matière plastique, en particulier de caoutchouc ; et/ou
l'élément flexible (110, 310) est un profilé, en particulier un profilé en caoutchouc ; et/ou
l'élément flexible (110, 310) est un joint d'étanchéité.

11. Dispositif (300) selon l'une des revendications 1 à 10, dans lequel l'élément flexible (310) est une barre profilée de sécurité, en particulier pour une porte d'un moyen de transport.

12. Porte pour un moyen de transport comportant un dispositif (100, 200, 300) selon l'une des revendications précédentes.

13. Moyen de transport, comprenant la porte selon la revendication 12.

14. Procédé (800) permettant la reconnaissance d'un coincement sur un moyen de transport, comprenant :
l'émission (810), par un émetteur à ultrasons, d'impulsions ultrasonores dans une cavité d'un élément flexible en direction d'un réflecteur, et dans lequel le réflecteur (130) fournit une référence à partir de laquelle des déformations de l'élément flexible (110, 310) peuvent être reconnues ;
la réception (820), par un détecteur d'ultrasons, d'ultrasons réfléchis dans la cavité et/ou sur le réflecteur et l'émission d'un signal de détection correspondant, dans lequel l'émetteur d'ultrasons (120) et le détecteur d'ultrasons (140) forment un transducteur, et dans lequel le réflecteur (130) est disposé en face du transducteur, de telle sorte que l'émetteur d'ultrasons (120) émet les ultrasons en direction du réflecteur (130) et que le réflecteur (130) reflète en retour les ultrasons en direction du détecteur d'ultrasons (140) ; et
la détermination (830), sur la base du signal de détection, de si une déformation de l'élément flexible est présente, qui indique qu'un objet provoquant la déformation est coincé par l'élément flexible.

15. Support de stockage comprenant un programme logiciel qui est conçu pour être exécuté sur un ou plusieurs processeurs et qui comprend des instructions qui provoquent l'exécution par le dispositif selon l'une des revendications 1 à 11, des étapes du procédé (800) selon la revendication 14.
